(19) Europäisches Patentamt
European Patent Office
Office européen des brevets

(11) **EP 2 014 812 A1**

(12) **EUROPEAN PATENT APPLICATION**
published in accordance with Art. 153(4) EPC

(43) Date of publication:
**14.01.2009 Bulletin 2009/03**

(51) Int Cl.:
**D04H 1/72** (2006.01)

(21) Application number: **07741767.3**

(22) Date of filing: **17.04.2007**

(86) International application number:
**PCT/JP2007/058331**

(87) International publication number:
**WO 2007/123114 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.04.2006 JP 2006114776**
**20.07.2006 JP 2006197931**

(71) Applicant: **TEIJIN LIMITED**
**Osaka-shi, Osaka 541-0054 (JP)**

(72) Inventors:
• **KOMURA, Shinya**
**Iwakuni-shi Yamaguchi 740-0014 (JP)**
• **MIYOSHI, Takanori**
**Iwakuni-shi Yamaguchi 740-0014 (JP)**

(74) Representative: **Hallybone, Huw George et al**
**Carpmaels & Ransford**
**43-45 Bloomsbury Square**
**London WC1A 2RA (GB)**

(54) **TITANIA FIBER AND METHOD FOR PRODUCING TITANIA FIBER**

(57) A titania fiber which is excellent in a balance between a BET specific surface area and which is able to reveal sufficient photocatalytic activity while having mechanical strength and a method for manufacturing the subject titania fiber are provided. By using a titanium oxide particle-containing as a fiber forming composition for forming a titania fiber, a fiber aggregate is manufactured from the subject composition by an electrospinning method and then baked, thereby obtaining a titania fiber which has an average fiber diameter of 50 nm or more and not more than 1,000 nm; when a reflection method by a goniometer is employed, has a crystallite size of 50 nm or more and not more than 200 nm; and has a BET specific surface area of 3 $m^2$/g or more and not more than 100 $m^2$/g.

Fig. 2

**Description**

[Technical Field]

The present invention relates to a titania fiber and to a method for manufacturing the subject titania fiber. In more detail, the invention relates to a titania fiber which is excellent in a balance between a BET specific surface area and a crystallite size so that it is able to reveal sufficient photocatalytic activity while having mechanical strength and which is therefore useful as a photocatalyst filter or a semiconductor material and to a method for manufacturing the subject titania fiber.

[Background Art]

Ceramic fibers are a useful material capable of being used in various fields of an electrical insulating material, a heat insulating material, a filler, a filter, etc. while making good use of properties such as electrical insulation properties, low heat conductivity or high elasticity. Such ceramic fibers are usually prepared by a melting method, a spindle method, a blowing method, etc., and a fiber diameter thereof is generally several $\mu$m (see Patent Document 1).
Now, in recent years, especially in the field of a filler or a filter, for the purposes of increasing the bonding area to a matrix material and enhancing the screen efficiency, finer ceramic fibers are being demanded.
Here, as a method for preparing fibers finer than conventional fibers, there is known an electrospinning method centering on materials composed of an organic polymer. In view of the matter that by charging a solution having a fiber forming solute such as organic polymers dissolved therein upon application of a high voltage, the solution is jetted toward an electrode, and the solvent is vaporized by jetting, the electrospinning method is a method capable of obtaining simply and easily an extremely fine fiber structure (see Patent Document 2).
As to titania fibers, there is also already known a method for preparing a fiber by such an electrospinning method (see Non-Patent Documents 1 to 2).

[Patent Document 1] JP-A-2003-105658
[Patent Document 2] JP-A-2002-249966
[Non-Patent Document 1] Dan Li, Younan Xia, "Direct Fabrication of Composite and Ceramic Hollow Nanofibers by Electrospinning", Nano Letters, US, The American Chemical Society, May 2004, Vol. 4, No. 5, pages 933 to 938
[Non-Patent Document 2] Mi Yeon Song, Do Kyun Kim, Kyo Jin Ihn, Seong Mu Jo, Dong Young Kim, "Electrospun TiO2 electrodes for dye-sensitized solar cells", Nanotechnology, US, Institute Of Physics, December 2004, Vol. 15, No. 12, pages 1861 to 1865

[Disclosure of the Invention]

[Problems that the Invention is to Solve]

However, in the methods described in the foregoing Non-Patent Documents, the organic polymer must be added even in an amount of from 0.1 to 0.5 times the titania raw material. For that reason, it is expected that the titania fibers obtained in the methods described in the foregoing Non-Patent Documents are of a porous structure.
In view of the matter that the titania fiber of a porous structure is thought to have a relatively large surface area, it is considered that the titania fiber is suitable for applications as a carrier material such as metal catalysts, etc. However, since the titania fiber of a porous structure is thought to be low in mechanical strength, it is considered that the titania fiber is difficultly used for applications where strength is required. Furthermore, since the titania fiber of a porous structure is small in crystallite size, it is considered to be a crystalline fiber containing a large number of lattice defects. Recombination of an electron and a hole frequently occurs due to the matter that lattice defects are contained. As a result, the electrical resistance in the interior of titania becomes large so that it is thought that sufficient photocatalytic activity cannot be revealed.
On the other hand, when the addition amount of the organic polymer to the titania raw compound is low, the crystallite size of the obtained titania fiber can be made large. However, the BET specific surface area of the fiber becomes small. For that reason, it was difficult to reveal photocatalytic activity.
In view of the foregoing problems, the invention has been made, and its object is to provide a titania fiber which is excellent in a balance between a BET specific surface area and a crystallite size so that it is able to reveal sufficient photocatalytic activity while having mechanical strength and a method for manufacturing the subject titania fiber.

[Means for Solving the Problems]

In view of the foregoing problems, the present inventors made extensive and intensive investigations. As a result, it has been found that by using a titanium oxide particle-containing composition as a fiber forming composition for forming a titania fiber, manufacturing a fiber aggregate from the subject composition by an electrospinning method and baking it, a titania fiber which is excellent in a balance between a BET specific surface area and a crystallite size can be obtained, leading to accomplishment of the invention.

That is, the invention is concerned with a titania fiber which has an average fiber diameter of 50 nm or more and not more than 1,000 nm; when a reflection method by a goniometer is employed, has a crystallite size of 50 nm or more and not more than 200 nm; and has a BET specific surface area of 3 $m^2/g$ or more and not more than 100 $m^2/g$.

Also, the invention is concerned with a titania fiber which has an average fiber diameter of 50 nm or more and not more than 1,000 nm; when a transmission method by an imaging plate is employed, has a crystallite size of 15 nm or more and not more than 50 nm; and has a BET specific surface area of 3 $m^2/g$ or more and not more than 100 $m^2/g$.

Also, the invention is concerned with a method for manufacturing of a titania fiber which includes a fiber forming composition preparation step of preparing a fiber forming composition containing a mixture of an alkyl titanate and a complex forming compound with an alkyl titanate, water, a titanium oxide particle and a fiber forming solute; a spinning step of jetting the fiber forming composition by an electrospinning method to obtain a fiber; an accumulation step of accumulating the fiber to obtain a fiber aggregate; and a baking step of baking the fiber aggregate to obtain a fiber structure.

[Advantages of the Invention]

Since the titania fiber of the invention is provided with a BET specific surface area and a crystallite size in a good balance, it is able to reveal sufficient photocatalytic activity while having mechanical strength. Therefore, the titania fiber of the invention is useful as a photocatalyst filter, a catalyst-supporting substrate or a semiconductor material.

In addition, the titania fiber of the invention can be formed into various structures upon being processed by weaving or the like. Also, the titania fiber of the invention can be used through a combination with other ceramic fibers than the titania fiber of the invention.

[Brief Description of the Drawings]

Fig. 1 is a drawing schematically showing a manufacturing apparatus for manufacturing the titania fiber of the invention.

Fig. 2 is a photographic view obtaining by photographing (x 2,000) of the surface of the titania fiber obtained in Example 1 by a scanning electron microscope.

Fig. 3 is an X-ray diffraction pattern of the titania fiber obtained in Example 1 when a transmission method by an imaging plate is employed.

Fig. 4 is a photographic view obtaining by photographing (x 2,000) of the surface of the titania fiber obtained in Example 2 by a scanning electron microscope.

Fig. 5 is a photographic view obtaining by photographing (x 2,000) of the surface of the titania fiber obtained in Comparative Example 1 by a scanning electron microscope.

Fig. 6 is an X-ray diffraction pattern of the titania fiber obtained in Comparative Example 1 when a transmission method by an imaging plate is employed.

[Description of Reference Numerals and Signs]

1: Fiber forming composition jetting nozzle
2: Fiber forming composition
3: Fiber forming composition storage tank
4: Electrode
5: High-voltage generating unit

[Best Modes for Carrying Out the Invention]

The invention is hereunder described in detail.

<Titania fiber>

The titania fiber of the invention is a titania fiber having an average fiber diameter, a crystallite size and a BET specific surface area each falling within a specified range. That is, the titania fiber of the invention is a titania fiber which has an average fiber diameter of 50 nm or more and not more than 1,000 nm; when a reflection method by a goniometer is employed, has a crystallite size of 50 nm or more and not more than 200 nm; and has a BET specific surface area of 3 $m^2$/g or more and not more than 100 $m^2$/g. Also, the titania fiber of the invention is a titania fiber which has an average fiber diameter of 50 nm or more and not more than 1,000 nm; when a transmission method by an imaging plate is employed, has a crystallite size of 15 nm or more and not more than 50 nm; and has a BET specific surface area of 3 $m^2$/g or more and not more than 100 $m^2$/g.

The "titania fiber" as referred to herein refers to a fiber structure composed of an oxide based ceramic containing titanium oxide as a major component and may contain, as a subsidiary component, an oxide based ceramic, for example, $Al_2O_3$, $SiO_2$, $Li_2O$, $Na_2O$, $MgO$, $CaO$, $SrO$, $BaO$, $B_2O_3$, $P_2O_5$, $SnO_2$, $ZrO_2$, $K_2O$, $Cs_2O$, $ZnO$, $Sb_2O_3$, $As_2O_3$, $CeO_2$, $V_2O_5$, $Cr_2O_3$, $MnO$, $Fe_2O_3$, $CoO$, $NiO$, $Y_2O_3$, $Lu_2O_3$, $Nb_2O_3$, $Er_2O_3$, $Yb_2O_3$, $HfO_2$, etc.

From the viewpoint of crystallinity of the titania fiber, an abundance ratio of the oxide based ceramic (subsidiary component) other than titanium oxide in the titania fiber of the invention is preferably not more than 5 % by mass relative to the mass of the titania fiber. The abundance ratio is more preferably not more than 1 % by mass, and especially preferably not more than 0.1 % by mass.

[Average fiber diameter of titania fiber]

Next, the average fiber diameter of the titania fiber is described. The average fiber diameter of the titania fiber of the invention is 50 nm or more and not more than 1,000 nm. The average fiber diameter of the titania fiber is more preferably in the range of 100 nm or more and not more than 500 nm. The case where the average fiber diameter of the titania fiber exceeds 1,000 nm is not preferable because flexibility of the titania fiber is poor.

[Fiber length of titania fiber]

Next, the average fiber length of the titania fiber is described. The fiber length of the titania fiber of the invention is preferably 100 $\mu$m or more. The fiber length of the titania fiber is more preferably 150 $\mu$m or more, and especially preferably 1 mm or more. When the fiber length of the titania fiber is less than 100 $\mu$m, the mechanical strength of a titania fiber structure obtained by aggregation of fibers is insufficient.

[Crystallite size of titania fiber]

Next, the crystallite size of the titania fiber is described. When a reflection method by a goniometer is employed, the crystalline size of the titania fiber of the invention is from 50 nm or more and not more than 200 nm. The crystalline size of the titania fiber is more preferably in the range of 60 nm or more and not more than 150 nm.

The crystallite size of the titania fiber is an index of the content of lattice defects, and the case where the crystallite size is smaller than 50 nm shows that the titania fiber is a fiber containing a large number of lattice defects and having low crystallinity. When a large number of lattice defects are contained, recombination of an electron and a hole frequently occurs, and therefore, such is not preferable from the viewpoint of photocatalytic activity. On the other hand, when the crystallite size is large, a small number of lattice defects are contained, and therefore, recombination of an electron and a hole hardly occurs, and the electrical resistance in the interior of titania becomes small. The case where the electrical resistance in the interior of titania is small is preferable from the viewpoint of photocatalytic activity because transfer of an electron and a hole onto the titania surface is efficiently revealed. However, when the crystallite size exceeds 200 nm, the fiber structure is broken due to the growth of a crystal.

Also, when a transmission method by an imaging plate is employed, the crystalline size of the titania fiber of the invention is from 15 nm or more and not more than 50 nm. The crystalline size of the titania fiber is more preferably in the range of 20 nm or more and not more than 50 nm.

In the invention, the crystallite size of the obtained titania fiber can be controlled by controlling the crystallite size of a titanium oxide particle and/or the content of a titanium oxide particle to be contained in the titania fiber as described later. The crystallite size of the titania fiber can also be controlled by controlling the temperature of a baking step of the titania fiber as described later.

[BET specific surface area of titania fiber]

Next, the BET specific surface area of the titania fiber is described. The BET specific surface area of the titania fiber of the invention is 3 m$^2$/g or more and not more than 100 m$^2$/g. The BET specific surface area of the titania fiber is preferably 5 m$^2$/g or more and not more than 100 m$^2$/g, and more preferably 10 m$^2$/g or more and not more than 100 m$^2$/g. The case where the BET specific surface area of the titania fiber is smaller than 3 m$^2$/g is not preferable because when the titania fiber is used as a photocatalyst, the photocatalytic activity is lowered, or when the titania fiber is used as catalyst-supporting substrate, the amount of the catalyst to be supported is lowered. On the other hand, the case where BET specific surface area of the titania fiber is larger than 100 m$^2$/g is not preferable because the strength of the titania fiber is lowered.

In the invention, the BET specific surface area of the titania fiber can be controlled by controlling the specific surface area and/or average particle size of a titanium oxide particle as described later.

[Crystal form of titania fiber]

Next, the crystal form of the titania fiber is described. The crystal form of titanium oxide includes an anatase type, a rutile type and a brookite type. Of these, it is preferable that the titania fiber of the invention is constituted of an anatase type. When other crystal form than the anatase type is present, the strength of the titania fiber is lowered, or the photocatalytic activity of the titania fiber is lowered.

In the titania fiber of the invention, as to an abundance ratio between an anatase type crystal and a rutile type crystal, in an X-ray diffraction pattern of the titania fiber, a peak intensity at 27 to 28° exhibiting the rutile type crystal is preferably from 0 to 30, and especially preferably from 0 to 10 relative to 100 of a peak intensity at 25 to 26° exhibiting the anatase type crystal.

<Manufacturing method of titania fiber>

Next, an embodiment for manufacturing the titania fiber of the invention is described.

In order to manufacture the titania fiber of the invention, any method from which a titania fiber which meets the foregoing requirements at the same time can be employed. However, a manufacturing method of a titania fiber including a fiber forming composition preparation step of preparing a fiber forming composition containing a mixture of an alkyl titanate and a complex forming compound with an alkyl titanate, water, a titanium oxide particle and a fiber forming solute; a spinning step of jetting the fiber forming composition by an electrospinning method to obtain a fiber; an accumulation step of accumulating the fiber to obtain a fiber aggregate; and a baking step of baking the fiber aggregate to obtain a fiber structure can be exemplified as a preferred embodiment.

Constitutional components of the fiber forming composition which is used in a preferred embodiment of the manufacturing method for the purpose of obtaining the titania fiber of the invention and the respective manufacturing steps are hereunder described.

[Constitution of fiber forming composition]

The fiber forming composition which is used in a preferred embodiment of the manufacturing method for the purpose of obtaining the titania fiber of the invention is described. The fiber forming composition to be used as a preferred embodiment is a composition containing a mixture of an alkyl titanate and a complex forming compound with an alkyl titanate, water, a titanium oxide particle and a fiber forming solute. The constitution of the fiber forming composition is hereunder described.

[Alkyl titanate]

Examples of the alkyl titanate which is used in a preferred embodiment of the manufacturing method include titanium tetramethoxide, titanium tetraethoxide, titanium tetra-n-propoxide, titanium tetraisopropoxide, titanium tetra-n-butoxide, titanium-tert-butoxide, etc. Of these, from the viewpoint of easiness of availability, titanium tetraisopropoxide and titanium tetra-n-butoxide are preferable.

[Complex forming compound with an alkyl titanate]

Next, the complex forming compound with an alkyl titanate is described. Examples of the complex forming compound with an alkyl titanate include coordination compounds, for example, carboxylic acids, amides, esters, ketones, phosphines, ethers, alcohols, thiols, etc.

In a fiber forming composition preparation step as described later, a mixture containing an alkyl titanate and a complex forming compound with an alkyl titanate is mixed with water. For that reason, it is not preferable that a compound which forms a firm complex to an extent that it does not exhibit reactivity with water at normal temperature is used as the complex forming compound with an alkyl titanate. From this viewpoint, it is preferable to use a carboxylic acid as the complex forming compound with an alkyl titanate. The complex forming compound with an alkyl titanate is more preferably an aliphatic carboxylic acid, further preferably a hydroxyl group-free aliphatic carboxylic acid, and especially preferably acetic acid.

Also, the addition amount of the complex forming compound with an alkyl titanate is not particularly limited so far as it is an amount in which the fiber forming composition for preparing the titania fiber of the invention can be prepared. The addition amount of the complex forming compound with an alkyl titanate is preferably 5 equivalents or more, and more preferably 7 equivalents or more and not more than 10 equivalents to the alkyl titanate.

[Water]

Water which is used in a preferred embodiment of the manufacturing method is not particularly limited. However, the case where a metal ion is contained as an impurity is not preferable because the foregoing metal remains in the prepared titania fiber. For that reason, water to be used in the present manufacturing method is preferably distilled water or ion exchanged water.

Also, the amount of water to be added is not particularly limited so far as it is an amount in which the titania fiber can be prepared from the fiber forming composition. The amount of water to be added is preferably 0.5 times or more and not more than 10 times the mass of the alkyl titanate. The amount of water to be added is more preferably 0.5 times or more and not more than 3 times, and especially preferably 0.5 times or more and not more than 1.5 times the mass of the alkyl titanate.

[Titanium oxide particle]

Next, the titanium oxide particle is described. The titanium oxide particle which is used in a preferred embodiment of the manufacturing method is not particularly limited so far as the titania fiber of the invention can be prepared. However, in view of the influence against the specific surface area of the obtained titania fiber, it is preferable to use a titanium oxide particle having a large specific surface area. A BET specific surface area is preferably 10 $m^2$/g or more and not more than 100 $m^2$/g, and more preferably 20 $m^2$/g or more and not more than 100 $m^2$/g.

Also, an average particle size of the titanium oxide particle is preferably 0.01 $\mu$m or more and not more than 10$\mu$ m. The case where the average particle size is smaller than 0.01 $\mu$m is not preferable because a proportion of the titanium oxide particle exposing on the surface of the obtained titania fiber is low, and the specific surface area of the titania fiber is small. On the other hand, the case where the average particle size is larger than 10 $\mu$m is not preferable because the dispersibility in the fiber forming composition is lowered.

A crystallite size of the titanium oxide particle influences the crystallite size of the obtained titania fiber. For that reason, the crystallite size of the titanium oxide particle to be used in the invention is preferably 5 nm or more and not more than 50 nm, and more preferably 10 nm or more and not more than 30 nm.

Also, the content of the titanium oxide particle influences the crystallite size of the obtained titania fiber. The content of the titanium oxide particle is preferably in the range of 10 % by mass or more and not more than 50 % by mass, and more preferably in the range of 20 % by mass or more and not more than 40 % by mass relative to the whole of the obtained titania fiber. The case where the content of the titanium oxide particle is less than 10 % by mass is not preferable because the surface area is small, and on the other hand, the case where the content of the titanium oxide particle exceeds 50 % by mass is not preferable because the strength of the titania fiber is lowered.

The crystal structure of the titanium oxide particle can be properly chosen and used from an anatase type and a rutile type depending upon the need.

[Fiber forming solute]

Next, the fiber forming solution is described. In a preferred embodiment of the manufacturing method for the purpose of obtaining the titania fiber of the invention, a fiber forming solution must be dissolved in the fiber forming composition for the purpose of bringing the fiber forming composition with spinnability. The fiber forming solute to be used is not particularly limited so far as the titania fiber of the invention can be prepared. However, from the viewpoint of easiness of handling and in view of the matter that fiber forming solute must be removed in a baking step, it is preferable to use an organic polymer.

Examples of the organic polymer to be used include polyethylene glycol, polyvinyl alcohol, polyvinyl esters, polyvinyl ethers, polyvinylpyridine, polyacrylamide, ether cellulose, pectin, starch, polyvinyl chloride, polyacrylonitrile, polylactic acid, polyglycolic acid, a polylactic acid-polyglycolic acid copolymer, polycaprolactone, polybutylene succinate, polyethylene succinate, polystyrene, polycarbonate, polyhexamethylene carbonate, polyarylate, polyvinyl isocyanate, polybutyl isocyanate, polymethyl methacrylate, polyethyl methacrylate, poly-n-propyl methacrylate, poly-n-butyl methacrylate, polymethyl acrylate, polyethyl acrylate, polybutyl acrylate, polyethylene terephthalate, polytetramethylene terephthalate, polyethylene naphthalate, poly-p-phenylene terephthalamide, a poly-p-phenylene tetraphthalamido-3,4'-oxydiphenylene terephthalamide copolymer, poly-m-phenylene isophthalamide, cellulose diacetate, cellulose triacetate, methyl cellulose, propyl cellulose, benzyl cellulose, fibroin, natural rubber, polyvinyl acetate, polyvinyl methyl ether, polyvinyl ethyl ether, polyvinyl n-propyl ether, polyvinyl isopropyl ether, polyvinyl n-butyl ether, polyvinyl isobutyl ether, polyvinyl tert-butyl ether, polyvinylidene chloride, poly(N-vinylpyrrolidone), poly(N-vinylcarbazole), poly(4-vinylpyridine), polyvinyl methyl ketone, polymethyl isopropenyl ketone, polypropylene oxide, polycyclopentene oxide, polystyrenesulfone, nylon 6, nylon 66, nylon 11, nylon 12, nylon 610, nylon 612, copolymers thereof, etc. Of these, from the viewpoint of solubility in water, polyethylene glycol, polyvinyl alcohol, polyvinyl esters, polyvinyl ethers, polyvinylpyridine, polyacrylamide, ethyl cellulose, pectin and starch are preferable; and polyethylene glycol is especially preferable.

A number average molecular weight of the organic polymer to be used is not particularly limited so far as the titania fiber of the invention can be prepared. The case where the number average molecular weight is low is not preferable because in view of the matter that the addition amount of the organic polymer must be made high, a gas generated in the baking step increases; and a possibility of the generation of a defect in the structure of the obtained titania fiber becomes high. On the other hand, the case where the number average molecular weight is high is not preferable because the solution viscosity is high so that spinning becomes difficult. So far as polyethylene glycol is concerned, the number average molecular weight of the organic polymer to be used is preferably in the range of 100, 000 or more and not more than 8, 000, 000, and more preferably in the range of 100,000 or more and not more than 6,000,000.

From the viewpoint of reducing a defective part of the titania fiber, it is preferable that the addition amount of the fiber forming solute is low as far as possible within a concentration range where the fiber can be formed. The addition amount of the fiber forming solute is preferably in the range of 0.01 % by mass or more and not more than 2 % by mass, and more preferably in the range of 0.01 % by mass or more and not more than 1 % by mass relative to the whole of the fiber forming composition.

[Other components]

In a preferred embodiment of the manufacturing method for the purpose of the titania fiber of the invention, components other than the foregoing essential components may be contained as components of the fiber forming composition within the range where the fiber can be formed from the fiber forming composition, and the gist of the invention is not deviated.

In the fiber forming composition in a preferred embodiment, water is used as an essential component. This water also plays a role as a solvent. In the fiber forming composition, from the viewpoint of enhancing stability of the composition and stability of spinning, it is possible to add a solvent other than water, for example, an alcohol, etc., and it is also possible to add a salt, for example, ammonium chloride, etc.

[Fiber forming composition preparation step]

In the fiber forming composition preparation step, a fiber forming composition containing a mixture containing an alkyl titanate and a complex forming compound with an alkyl titanate, water, a titanium oxide particle and a fiber forming solute is prepared.

In the fiber forming composition preparation step, first of all, a mixture containing an alkyl titanate and a complex forming compound with an alkyl titanate is obtained. Here, the mixture obtained by mixing an alkyl titanate and a complex forming compound with an alkyl titanate is a uniform solution.

A mixing method is not particularly limited, and a well-known method such as stirring, etc. can be employed. Also, the addition order is not particularly limited. A form in which one is used as a base while adding the other, or a form in which equal amounts of the both are simultaneously added may be employed.

Subsequently, the mixture containing an alkyl titanate and a complex forming compound with an alkyl titanate is mixed with water. By mixing them, a gel is formed. In the fiber forming composition preparation step, by dissociating the formed gel, a transparent titanium-containing solution is prepared.

In adding water in the mixture containing an alkyl titanate and a complex forming compound with an alkyl titanate, when the concentration of water is locally high, there is a possibility that a gel which is difficultly dissociated is formed. For that reason, it is preferable to gradually add water while stirring the mixture containing an alkyl titanate and a complex forming compound with an alkyl titanate.

Also, in dissociating the formed gel, the gel can be dissociated by further continuing the stirring. When the gel is dissociated, a transparent titanium-containing solution can be obtained.

Subsequently, a titanium oxide particle and a fiber forming solute are added in the above-obtained titanium-containing solution, thereby ultimately obtaining a fiber forming composition.

A method for adding a titanium oxide particle and a fiber forming solute to the titanium-containing solution is not particularly limited so far as the titanium-containing solution and the titanium oxide and the fiber forming solute can be substantially uniformly mixed. Also, the addition order of the titanium oxide and the fiber forming solute is not particularly limited, and the addition method may be sequential addition or may be simultaneous addition.

As to the addition timing of the fiber forming solute, the fiber forming solute may be added at the time of preparation of a titanium-containing solution. In that case, the fiber forming solute may be added at the time of obtaining a mixture containing an alkyl titanate and a complex forming compound with an alkyl titanate or may be added at the time of mixing the subject mixture and water. In the case where the fiber forming solute and water are simultaneously added, for example, it is possible to previously mixing water and a fiber forming solute and gradually adding the mixture in a mixture containing an alkyl titanate and a complex forming compound with an alkyl titanate.

In the invention, from the viewpoints of stability of the solution of a fiber forming composition and stability of spinning, in case of adding a solvent other than water in the fiber forming composition or in case of adding other arbitrary components, the addition can be made at any of the time of obtaining the mixture containing an alkyl titanate and a complex forming compound with an alkyl titanate, the time of mixing the subject mixture with water or the time of further adding a titanium oxide particle.

[Spinning step]

In the spinning step, by jetting the above-obtained fiber forming composition by an electrospinning method, a fiber is prepared. A spinning method and a spinning apparatus in the spinning step are hereunder described.

[Spinning method]

In the spinning step in a preferred embodiment, a fiber is prepared by an electrospinning method. The "electrospinning method" as referred to herein is a method in which a solution or dispersion containing a fiber forming substrate, etc. is discharged into an electrostatic field to be formed between electrodes, and the solution or dispersion is spun toward the electrodes, thereby forming a fibrous substance. The fibrous substance obtained by spinning is laminated on the electrode as a collecting substrate in an accumulation step as described later.

Also, the formed fibrous substance includes not only a state that the fiber forming solute, the solvent and the like to be contained in the fiber forming composition are completely distilled but a state that these remain while being contained in the fibrous substance.

The usual electrospinning is carried out at room temperature. However, in the invention, in the case where volatilization of the solvent, etc. is insufficient or other case, it is possible to control the temperature of the spinning circumstance, or it is possible to control the temperature of the collecting substrate to be used in an accumulation step as described later as the need arises.

[Spinning apparatus]

Next, an apparatus to be used in the electrospinning method is described.

As to an electrode for forming an electrostatic field, any material including a metal, an inorganic material, an organic material, etc. may be used so far as it exhibits conductivity. Also, a material prepared by providing a thin film made of a metal, an inorganic material, an organic material, etc., all of which exhibit conductivity, on an insulating material may be used.

The electrostatic field to be used in the electrospinning method is formed between a pair of electrodes or among plural electrodes, and a high voltage may be applied to any of the electrodes which form an electrostatic field. This includes, for example, the case of using three electrodes in total including two high-voltage electrodes having a different voltage value (for example, 15 kV and 10 kV) and one electrode connected to the ground and the case of using electrodes in the number exceeding three.

Also, as a method for discharging the fiber forming composition into electrostatic field, an arbitrary method can be employed, and examples thereof include a method in which the fiber forming composition is placed in an appropriate position in the electrostatic field and fed into a nozzle, and the fiber forming composition is spun from the subject nozzle by an electrical field to form a fiber.

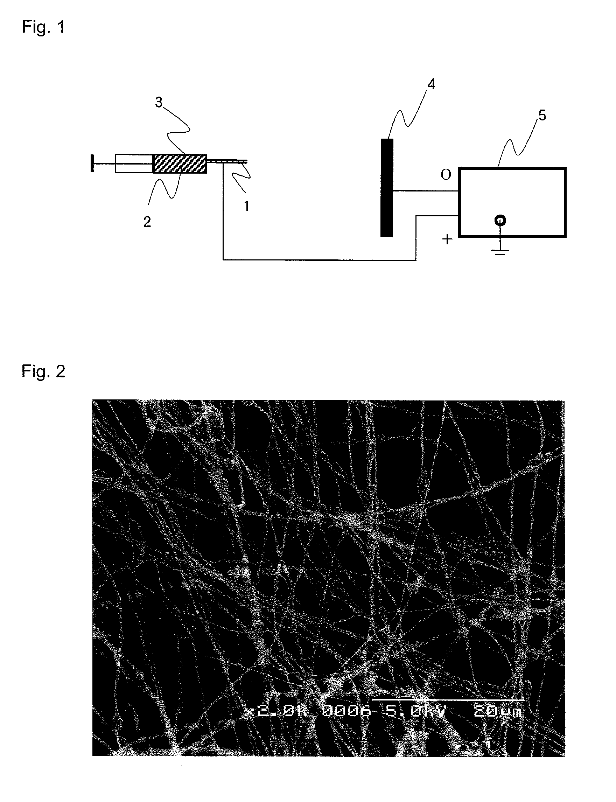

The electrospinning method is more specifically described below with reference to Fig. 1.

Fig. 1 is a drawing showing an embodiment of the apparatus to be used in the electrospinning method. In the electrospinning apparatus as illustrated in Fig. 1, a fiber forming composition jetting nozzle 1 in an injection needle form having a voltage applied thereto by a high-voltage generating unit 5 is set up in a tip of a fiber forming composition storage tank 3, and a fiber forming composition 2 is guided into the tip of the fiber forming composition jetting nozzle 1. In the apparatus as illustrated in Fig. 1, though the high-voltage generating unit 5 is used, it is possible to use an appropriate measure.

The tip of the fiber forming composition jetting nozzle 1 is disposed at an appropriate distance from an electrode 4. The fiber forming composition 2 is jetted from the tip of the fiber forming composition jetting nozzle 1 to form a fiber between the tip of the fiber forming composition jetting nozzle 1 and the electrode 4. Here, as to the shape of the nozzle for jetting the fiber forming composition, it is preferable that its tip makes an acute angle. When the tip of the jetting nozzle makes an acute angle, it is easy to control the formation of a droplet in the tip of the nozzle.

In feeding the fiber forming composition 2 into the electrostatic field from the fiber forming composition jetting nozzle 1, the production rate or production stability of a fiber can also be enhanced by using plural nozzle disposed in parallel.

Though the distance between the fiber forming composition jetting nozzle 1 and the electrode 4 relies upon the charge quantity, nozzle dimension, jetting amount of the fiber forming composition, concentration of the fiber forming composition and the like, a distance of from 5 to 20 cm is favorable at the time of about 10 kV. An electrostatic potential to be applied is in general in the range of from 3 to 100 kV, preferably from 5 to 50 kV, and more preferably from 5 to 30 kV. A desired potential can be made by a conventionally known arbitrary appropriate method.

[Accumulation step]

In the accumulation step, the fiber obtained in the foregoing spinning step is accumulated to obtain a fiber aggregate. Specifically, the fibrous substance formed in the foregoing spinning step is accumulated (laminated) on an electrode as the collecting substrate, thereby obtaining a fiber aggregate.

Accordingly, when a plane surface is used as an electrode which becomes the collecting substrate, a planar fiber aggregate can be obtained. However, by changing the shape of the collecting substrate, a fiber aggregate having a desired shape can also be prepared. Also, when the uniformity is low, for example, the case where the fiber aggregate is accumulated (laminated) while being concentrated into a place on the collecting substrate, etc., it is possible to vibrate or rotate the substrate.

In view of the matter that the fiber aggregate before baking has low strength, in peeling the fiber aggregate accumulated (laminated) on the collecting substrate, a part of its structure may possibly be broken. For that reason, it is also possible to set up a static elimination device, etc. between the collecting substrate and the nozzle and to laminate the fiber aggregate in a cotton-like form between the nozzle and the static eliminating device.

Also, similar to the above, the fiber aggregate includes not only a state that the solvent and the like to be contained in the fiber forming composition are completely distilled to form an aggregate but a state that the solvent and the like remain while being contained in the fibrous substance.

[Baking step]

In the baking step, the fiber aggregate obtained in the foregoing accumulation step is baked to obtain a fiber structure of the titania fiber of the invention.

In baking, though a general electric furnace can be used, an electric furnace in which the gas within the furnace can be substituted may be used as the need arises. Also, for the purposes of sufficiently growing an anatase type crystal and controlling dislocation of a rutile type crystal, the baking temperature is preferably in the range of 300°C or higher and not higher than 900°C, and more preferably in the range of 500°C or higher and not higher than 800°C.

In the invention, by controlling the temperature rise rate of the baking step, the crystallite size of the obtained titania fiber can be controlled. Specifically, by making the temperature rise rate slow, it is possible to grow the crystal so as to have a large crystallite size. The temperature rise rate is preferably in the range of from 0.5°C/min to 5°C/min.

[Examples]

The invention is more specifically described below with reference to the following Examples and Comparative Examples, but it should be construed that the invention is never limited thereto.

<Measurement and evaluation methods>

In the Examples and Comparative Examples, the following items were measured and evaluated according to the following methods.

[Average fiber diameter]

The surface of the obtained titania fiber was photographed by a scanning electron microscope (a trade name: S-2400, manufactured by Hitachi, Ltd.) (magnification: 2,000 times), thereby obtaining a photographic view. Twenty places were chosen at random among the obtained photographic views and measured for a filament diameter. An average value was determined from all of the measurement results of fiber diameter (n = 20) and defined as an average fiber diameter of the titania fiber.

[BET specific surface area]

The measurement of a specific surface area of the obtained titania fiber was carried out by the BET method using a nitrogen gas, thereby obtaining a BET specific surface area.

[X-ray diffraction (measurement of crystallite size)]

An X-ray diffraction profile was obtained by using an X-ray diffraction apparatus (a trade name: ROTA FLEX RU200b, manufactured by Rigaku Corporation) as the X-ray diffraction apparatus and employing a reflection method by a goniometer with a radius of 185 nm. The X-rays were monochromatized to Cu $K_\alpha$-rays by a monochromator; and a measurement sample prepared by adding a high-purity silicon powder for X-ray diffraction standard as an internal standard to the obtained ceramic fiber was used.

[Crystallite size in the case of employing a reflection method by a goniometer]

The above-obtained X-ray diffraction profile was subjected to intensity correction, and a diffraction angle $2\theta$ was corrected by a 111 diffraction peak of silicon of the internal standard. Here, a half band width of the 111 diffraction peak of silicon was not more than 0.15°. As to the corrected X-ray diffraction profile, the crystallite size was calculated according to the following Scherrer's expression by using a diffraction peak appearing in the vicinity of 25.3°. Diffraction peaks of titanium oxide and silicon in the range of $2\theta$ of from 24 to 30° were not separated due to Cu $K\alpha_1$ and $K\alpha_2$ rays and all treated as Cu $K\alpha$.

(Expression 1)

$$D = K \times \lambda/\beta\cos\theta$$

D: Crystallite size
$\lambda$: Measurement X-ray wavelength
$\beta$: Spreading of diffraction line by crystallite size
$\theta$: Bragg angle of diffraction peak
K: Shape factor (Scherrer's constant)
Here, in order to correct the spreading of the optical system, ($\beta = B - b$) obtained by subtracting a half band width <u>b</u> of the 111 diffraction peak of silicon of the internal standard from a half band width <u>B</u> of the diffraction peak of titanium oxide appearing in the vicinity of 25.3° was employed as $\beta$; and K and $\lambda$ were defined as 1 and 0. 15418 nm, respectively.

[X-ray diffraction (measurement for crystal form and crystallite size)]

By using an X-ray diffraction apparatus (a trade name: ROTA FLEX RU200B, manufactured by Rigaku Corporation) and using $K_\alpha$ rays of Cu as an X-ray source, the X-rays were monochromatized by a multilayer confocal mirror, and an X-ray diffraction pattern of the obtained titania fiber was obtained by a transmission method using an imaging plate.

[Crystallite size in the case of employing a transmission method by an imaging plate]

Of the above-obtained X-ray diffraction patterns, the diffraction peak at 25.4° was used, and the crystallite size was calculated according to the following Scherrer's expression by using a diffraction peak at 25.4°.

(Expression 1)

$$D = K \times \lambda/\beta\cos\theta$$

D: Crystallite size

λ: Measurement X-ray wavelength

β: Spreading of diffraction line by crystallite size

θ: Bragg angle of diffraction peak

K: Shape factor (Scherrer's constant)

[Photocatalytic activity]

The evaluation of photocatalytic activity of the obtained titania fiber was carried out by using a fading reaction of Methylene Blue. Specifically, 5 mL of a 10 ppm Methylene Blue aqueous solution was poured into a Petri dish having a diameter of 37 mm, and 10 mg of the titania fiber was dipped in this solution. Subsequently, the solution having the titania fiber dipped therein was irradiated with ultraviolet rays with an intensity of 13 mW/cm$^2$, and an absorbance at 665 nm at the point of ultraviolet ray irradiation time of 18 minutes was measured, thereby evaluating the photocatalytic activity. An absorbance before the ultraviolet ray irradiation was 2.536 A.

<Example 1>

[Fiber forming composition preparation step]

[First preparation step]

1.3 parts by mass of acetic acid (a special grade, manufactured by Wako Pure Chemical Industries, Ltd.) was added to 1 part by mass of titanium tetra-n-butoxide (a first grade, manufactured by Wako Pure Chemical Industries, Ltd.) and stirred to obtain a uniform solution. As a result of adding 1 part by mass of ion exchanged water to the obtained solution while stirring, a gel was formed in the solution. By further continuing the stirring, the formed gel was dissociated, whereby a transparent titanium-containing solution could be prepared.

[Second preparation step]

The above-obtained titanium-containing solution was mixed with 0.1 parts by mass of a titanium oxide particle (manufactured by Wako Pure Chemical Industries, Ltd., crystal form: anatase type, BET specific surface area: 41 m$^2$/g, crystallite size in the case of employing a reflection method by a goniometer: 36 nm, particle size: not more than 5 μm, average particle size: 0.5 μm, content (by purity analysis): 99.9 %) to obtain a white solution. Subsequently, the obtained white solution was mixed with 0.016 parts by mass of polyethylene glycol (a first grade, manufactured by Wako Pure Chemical Industries, Ltd., average molecular weight: 300,000 to 500,000) to prepare a fiber forming composition (spinning solution).

[Spinning step and accumulation step]

The above-obtained fiber forming composition (spinning solution) was jetted and continuously spun by using the electrospinning apparatus as illustrated in Fig. 1 to accumulate the fiber, thereby preparing a fiber aggregate. At that time, the inner diameter of the jetting nozzle 1 was 0.2 mm, the voltage was 15 kV, and the distance from the jetting nozzle 1 to the electrode 4 was 15 cm.

[Baking step]

The above-obtained fiber aggregate was subjected to temperature rise to 600°C over 10 hours using an electrical furnace and thereafter, kept at 600°C for 2 hours, thereby obtaining a fiber structure of a titania fiber.

[Measurement and evaluation]

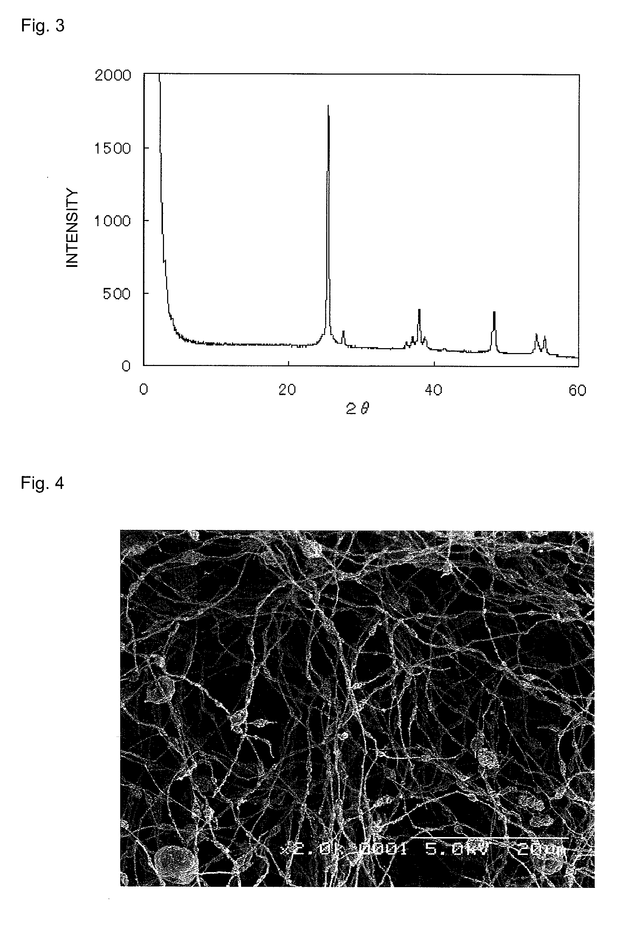

The obtained titania fiber was subjected to the foregoing various measurements and evaluations. As a result, it had an average fiber diameter of 460 nm and a BET specific surface area of 11.1 m$^2$/g. Also, in the X-ray diffraction results of the obtained titania fiber, a sharp peak was found at 2θ of 25.4°, and therefore, it was confirmed that an anatase type crystal was formed. The crystallite size in the case of employing a transmission method by an imaging plate was 31 nm. Furthermore, the crystallite size in the case of employing a reflection method by a goniometer was 105 nm. A scanning electron microscopic photograph of the surface of the titania fiber is shown in Fig. 2; and an X-ray diffraction pattern in the case of employing a transmission method by an imaging plate is shown in Fig. 3.

Also, an absorbance at 665 nm as the photocatalyst was 0.172 A.

<Example 2>

[Fiber forming composition preparation step]

[First preparation step]

A transparent titanium-containing solution was prepared in the same operations as in Example 1.

[Second preparation step]

The above-obtained titanium-containing solution was mixed with 0.2 parts by mass of a titanium oxide particle (manufactured by Wako Pure Chemical Industries, Ltd., crystal form: anatase type, BET specific surface area: 41 m$^2$/g, crystallite size in the case of employing a reflection method by a goniometer: 36 nm, particle size: not more than 5 $\mu$m, average particle size: 0.5 $\mu$m, content (by purity analysis) : 99.9 %) to obtain a white solution. Subsequently, the obtained white solution was mixed with 0.016 parts by mass of polyethylene glycol (a first grade, manufactured by Wako Pure Chemical Industries, Ltd., average molecular weight: 300,000 to 500,000) to prepare a fiber forming composition (spinning solution).

[Spinning step and accumulation step]

The above-obtained fiber forming composition (spinning solution) was spun into a fiber in the same manner as in Example 1, from which was subsequently prepared a fiber aggregate. The apparatus and condition for spinning were the same as in Example 1.

[Baking step]

The above-obtained fiber aggregate was subjected to baking in the same operations as in Example 1, thereby obtaining a fiber structure of a titania fiber.

[Measurement and evaluation]

The obtained titania fiber was subjected to the foregoing various measurements and evaluations. As a result, it had an average fiber diameter of 340 nm and a BET specific surface area of 16.4 m$^2$/g. Also, in the X-ray diffraction results of the obtained titania fiber, a sharp peak was found at 2θ of 25.4°, and therefore, it was confirmed that an anatase type crystal was formed. The crystallite size in the case of employing a reflection method by a goniometer was 65 nm. A scanning electron microscopic photograph of the surface of the titania fiber is shown in Fig. 4.
Also, an absorbance at 665 nm as the photocatalyst was 0.130 A.

<Comparative Example 1>

[Fiber forming composition preparation step]

[First preparation step]

A transparent titanium-containing solution was prepared in the same operations as in Example 1.

[Second preparation step]

The above-obtained titanium-containing solution was mixed with 0.016 parts by mass of polyethylene glycol (a first grade, manufactured by Wako Pure Chemical Industries, Ltd., average molecular weight: 300,000 to 500,000) without adding a titanium oxide particle, thereby preparing a fiber forming composition (spinning solution).

[Spinning step and accumulation step]

The above-obtained fiber forming composition (spinning solution) was spun into a fiber in the same manner as in Example 1, from which was subsequently prepared a fiber aggregate. The apparatus and condition for spinning were the same as in Example 1.

[Baking step]

The above-obtained fiber aggregate was subjected to baking in the same operations as in Example 1, thereby obtaining a fiber structure of a titania fiber.

[Measurement and evaluation]

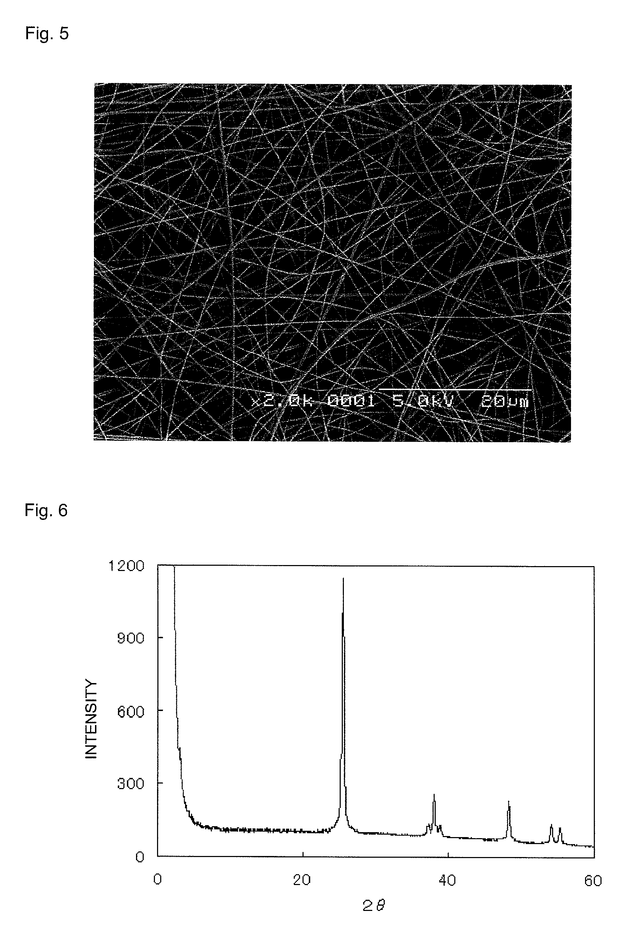

The obtained titania fiber was subjected to the foregoing various measurements and evaluations in the same manner as in Example 1. As a result, it had an average fiber diameter of 260 nm and a BET specific surface area of 0.4 $m^2$/g. Also, in the X-ray diffraction results of the obtained titania fiber, a sharp peak was found at $2\theta$ of 25.4°, and therefore, it was confirmed that an anatase type crystal was formed. The crystallite size in the case of employing a transmission method by an imaging plate was 49 nm. Furthermore, the crystallite size in the case of employing a reflection method by a goniometer was 169 nm. A scanning electron microscopic photograph of the surface of the titania fiber is shown in Fig. 5; and an X-ray diffraction pattern in the case of employing a transmission method by an imaging plate is shown in Fig. 6.

Also, an absorbance at 665 nm as the photocatalyst was 0.325 A. Accordingly, since the titania fibers of Example 1 and Example 2 are smaller in the absorbance than the titania fiber of Comparative Example 1, it is exhibited that the fading reaction of Methylene Blue is more advanced, and it is understood that the photocatalytic activity is high.

**Claims**

1. A titania fiber which has an average fiber diameter of 50 nm or more and not more than 1,000 nm; when a reflection method by a goniometer is employed, has a crystallite size of 50 nm or more and not more than 200 nm; and has a BET specific surface area of 3 $m^2$/g or more and not more than 100 $m^2$/g.

2. A titania fiber which has an average fiber diameter of 50 nm or more and not more than 1,000 nm; when a transmission method by an imaging plate is employed, has a crystallite size of 15 nm or more and not more than 50 nm; and has a BET specific surface area of 3 $m^2$/g or more and not more than 100 $m^2$/g.

3. The titania fiber according to claim 1 or 2, wherein the titania fiber is composed of an anatase type crystal.

4. A method for manufacturing of a titania fiber which including
   a fiber forming composition preparation step of preparing a fiber forming composition containing a mixture of an alkyl titanate and a complex forming compound with an alkyl titanate, water, a titanium oxide particle and a fiber forming solute;
   a spinning step of jetting the fiber forming composition by an electrospinning method to obtain a fiber;
   an accumulation step of accumulating the fiber to obtain a fiber aggregate; and
   a baking step of baking the fiber aggregate to obtain a fiber structure.

5. The method for manufacturing a titania fiber according to claim 4, wherein the fiber forming composition preparation step includes a step of dissociating a gel formed by mixing the mixture containing the alkyl titanate and the complex forming compound with an alkyl titanate with water to prepare a titanium-containing solution.

6. The method for manufacturing a titania fiber according to claim 4 or 5, wherein the fiber forming solute is an organic polymer.

7. The method for manufacturing a titania fiber according to claim 6, wherein the organic polymer is polyethylene glycol.

8. The method for manufacturing a titania fiber according to anyone of claims 4 to 7, wherein the complex forming compound with an alkyl titanate is a carboxylic acid.

9. The method for manufacturing a titania fiber according to claim 8, wherein the carboxylic acid is acetic acid.

Fig. 1

Fig. 2

Fig. 3

Fig. 4

Fig. 5

Fig. 6

## INTERNATIONAL SEARCH REPORT

| | International application No. |
|---|---|
| | PCT/JP2007/058331 |

A. CLASSIFICATION OF SUBJECT MATTER
$D04H1/72$(2006.01)i, $D01F9/08$(2006.01)i, $D04H1/42$(2006.01)i

According to International Patent Classification (IPC) or to both national classification and IPC

B. FIELDS SEARCHED

Minimum documentation searched (classification system followed by classification symbols)
D04H1/00-18/00, D01D1/00-13/02, D01F9/08-9/32

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-298728 A (Sumitomo Chemical Co., Ltd.),<br>28 October, 2004 (28.10.04),<br>Claims; Par. Nos. [0035] to [0038]<br>(Family: none) | 1-3<br>4-9 |
| P,A | JP 2007-63684 A (Hyogo-ken),<br>15 March, 2007 (15.03.07),<br>Full text<br>(Family: none) | 1-9 |
| P,A | JP 2007-9398 A (Korea Institute of Science and Technology),<br>18 January, 2007 (18.01.07),<br>Full text<br>(Family: none) | 1-9 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>04 June, 2007 (04.06.07) | Date of mailing of the international search report<br>19 June, 2007 (19.06.07) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

### Patent documents cited in the description

- JP 2003105658 A

- JP 2002249966 A

### Non-patent literature cited in the description

- Direct Fabrication of Composite and Ceramic Hollow Nanofibers by Electrospinning. **DAN LI ; YOUNAN XIA.** Nano Letters, US. The American Chemical Society, May 2004, vol. 4, 933-938

- **MI YEON SONG ; DO KYUN KIM ; KYO JIN IHN ; SEONG MU JO ; DONG YOUNG KIM.** Electrospun TiO2 electrodes for dye-sensitized solar cells. *Nanotechnology,* December 2004, vol. 15 (12), 1861-1865